Europäisches Patentamt

**European Patent Office**

Office européen des brevets

(11) Publication number: **0 205 713**

**B1**

(12) **EUROPEAN PATENT SPECIFICATION**

(45) Date of publication of patent specification: **28.02.90**

(51) Int. Cl.[5]: **F 16 D 65/12**

(21) Application number: **85401138.4**

(22) Date of filing: **10.06.85**

(54) Brake rotor with vibration harmonic suppression.

(43) Date of publication of application:
**30.12.86 Bulletin 86/52**

(45) Publication of the grant of the patent:
**28.02.90 Bulletin 90/09**

(84) Designated Contracting States:
**DE FR GB IT SE**

(56) References cited:
**DE-A-3 120 104**
**DE-A-3 325 831**
**US-A-3 298 476**
**US-A-4 327 792**
**US-A-4 379 501**

**PATENT ABSTRACTS OF JAPAN, vol. 7, no. 279 (M-262)1424r, 13th December 1983; & JP - A - 58 156 736 (NISSAN JIDOSHA) 17-09-1983**

(73) Proprietor: **MOTOR WHEEL CORPORATION**
**4000 Collins Road**
**Lansing Michigan 48910 (US)**

(72) Inventor: **Murray, Scott L.**
**2320 Barritt Street**
**Lansing Michigan (US)**

(74) Representative: **Lemoine, Michel et al**
**Cabinet Michel Lemoine et Bernasconi 13**
**Boulevard des Batignolles**
**F-75008 Paris (FR)**

Courier Press, Leamington Spa, England.

## Description

The present invention is directed to brake rotors and more particularly to a ventilated disc brake rotor structured for suppression of harmonic vibration during braking.

Vibration of a brake rotor during brake operation can cause a loud and irritating "squeal" if permitted to resonate at audible harmonic frequencies. This problem can occur with conventional drum and disc brake systems. Prior art attempts to address this problem have included the use of sound deadening inserts or fillers in the rotor (drum or disc) structure, and special material compositions in the rotor and/or brake pad. In the specific environment of ventilated disc brake rotors, the U.S. Patents to Day 3,298,476 and Hagiwara et al 4,379,501 concern a brake rotor having the features set out in the first part of claim 1 and disclose techniques for varying the pattern of cooling fins around the rotor circumference to break up the vibration harmonic resonance patterns. In Day, the rotor circumference is divided into equal angular segments, and the spacing between cooling fins in each segment is random or non-repetitive. Hagiwara et al contemplates irregular or non-uniform spacing between and thickness of cooling fins around the rotor.

A general object of the present invention is to provide an improved technique for damping vibration harmonics, and thereby reducing irritating squeal, in both drum and disc brake rotors.

A further object of the invention is to provide a brake rotor with enhanced vibration damping capacity while maintaining desired balance, strength and thermal dissipation capacity.

Another and more specific object of the invention is to provide a ventilated disc brake rotor which is structured to reduce or eliminate brake squeal.

In general, in accordance with one important aspect of the present invention for frequency modulation of vibration harmonics a total number of fin cycles is selected, with each fin cycle consisting of a fin and a space between that fin and the next-adjacent fin in the array. The circumferential array of fin cycles is then divided into a plurality of nominally unequal fractional angular segments. The nominal fractional size of the angular segments and the number of fin cycles in each segment are determined by modification of the techniques disclosed and claimed in the U.S. Patent to Landers 4,327,792 issued to The Goodyear Tire & Rubber Company, parent to the applicant of this application, in a manner to adapt the same for brake rotor applications in accordance with the principles of the present invention.

The term "harmonic sequence segment" is employed in this patent. However, the basic technique applied to tires in the Landers disclosure required modification as applied to brake rotors in accordance with the present disclosure because, whereas there are hundreds of pitches or cycles around a tire, there is only a small number of cycles around a brake rotor, and further only prime numbers are employed in the preferred implementation of the present disclosure.

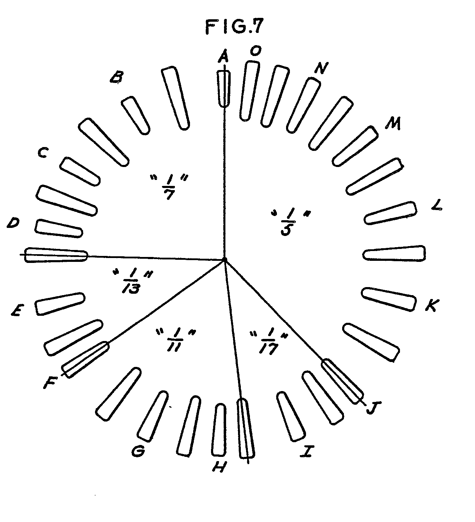

Thus, a "nominal fractional segment" refers to a "segment" of the brake rotor cycle array that contains an integral number of cycles and is "nominally" expressed as a "fraction" of the total circumference, preferably a fraction that is a prime number. That is, the "nominal" size of each segment is a fractional prime number, although the actual size varies substantially from the "nominal" size. Because of the limited number of cycles around the array, the fractional segments that may be "nominally unequal" may in fact actually be equal. See the discussion at the bottom of page 6 of the description in conjunction with the embodiment of FIG. 7.

It follows that the "segment nominal fraction" for each "segment" is the nominal fractional size of that segment as compared with the whole.

The above objects can be achieved by the features set out in the characterising part of claim 1.

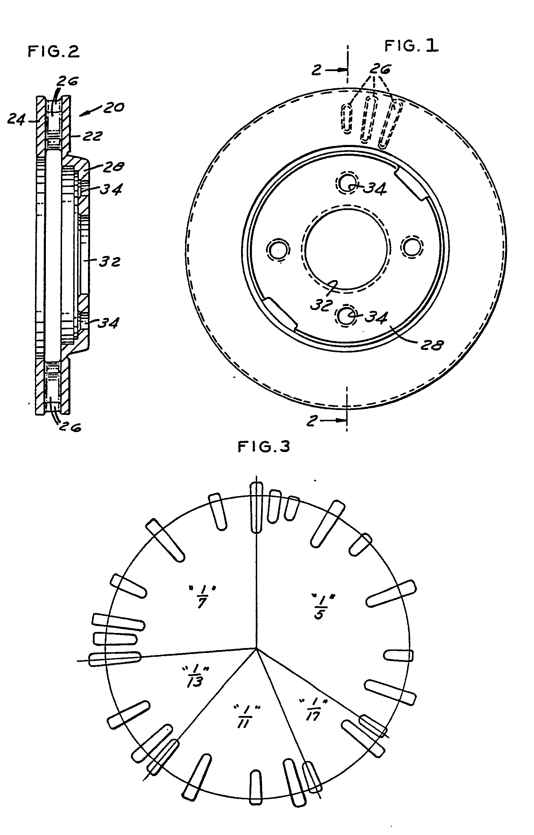

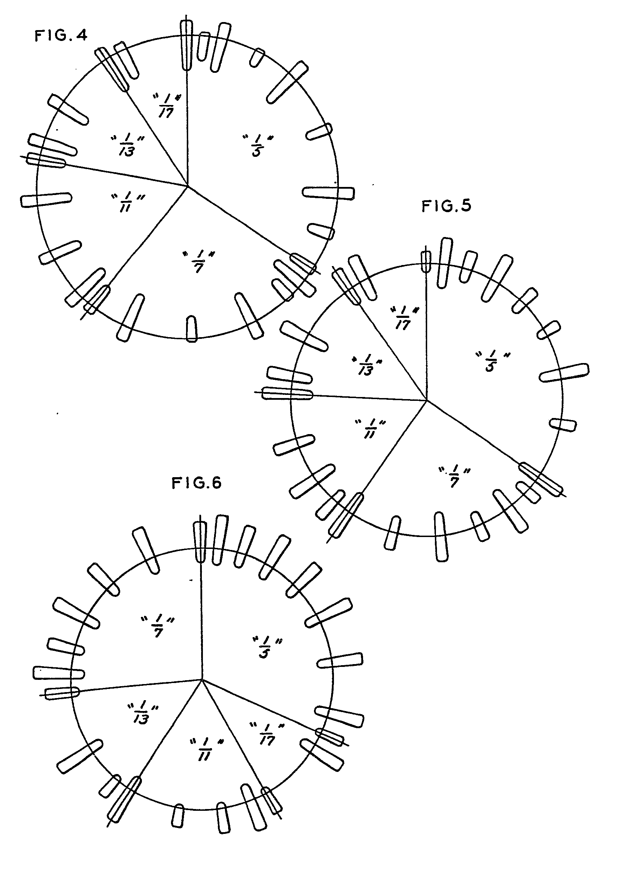

The total number of fin cycles in the circumferential array, the number of fractional segments and the nominal fractional size of each fractional array segment preferably are prime numbers in accordance with the present invention. The sequence of fractional angular segments in the circumferential fin array is in non-sequential order by size in the embodiments of FIGS. 3, 6 and 7 of the present disclosure, or is in order of increasing segment size (FIGS. 4 and 5). The angular dimension and sequence of the fin cycles in each segment are in cyclic patterns within each segment in the embodiments of FIGS. 3 and 4 so that the wavelength of the predominant vibration frequency for each segment substantially corresponds to the circumferential length of that segment, or in non-cyclic and non-repetitive progressively increasing patterns within each segment (FIGS. 5, 6 and 7). This nominally unequal segmentation of and selected spacing between ventilation fins so modulates the frequencies of vibration as to suppress harmonic resonances.

In accordance with a second important aspect of the invention disclosed herein, radial lengths of the ventilation fins are also selected and controlled to modulate and dampen the amplitude of vibration, and to balance the rotor about its axis of rotation. This is accomplished by locating the center of gravity of a particular rotor design assuming that all fins are of equal length, and then shortening the fin length at alternate fin positions around the entire array as an exponential function of angle.

Preferred features of the invention are set out in the subclaims.

The invention, together with additional objects, features and advantages thereof, will be best understood from the following description, the appended claims and the accompanying drawing in which:

FIG. 1 is an axial elevational view of a ventilated disc brake rotor;

FIG. 2 is a sectional view taken along the line 2—2 in FIG. 1;

FIGS. 3—7 are schematic illustrations of circumferential patterns of disc ventilation fins in accordance

2

with five presently preferred embodiments of the invention;

FIGS. 8 and 9 are graphic illustrations useful in understanding one aspect of the invention;

FIG. 10 is a schematic illustration of another disc brake fin pattern in accordance with the invention; and

FIG. 11 is a graphic illustration useful in explaining the structure of FIG. 10.

FIGS. 1 and 2 illustrate a ventilated disc brake rotor 20 as comprising a pair of flat annular friction rings or cheeks 22, 24 spaced from each other by a circumferential array of radially extending angularly spaced ventilation fins 26. A central mounting surface 28 is integral with friction ring 22 and is provided with suitable apertures 32, 34 for mounting rotor 20 on a vehicle. Rotor 20 may be of composite or one-piece cast construction of suitable composition. To the extent thus far described, rotor 20 is of conventional construction. In operation, rotor 20 is suitably mounted on a vehicle so that the axially facing surfaces of friction rings 22, 24 may be selectively engaged by friction pads on one or more caliper assemblies (not shown) for slowing or braking an associated vehicle wheel. The present invention is directed to selective control of the length of and/or spacing between ventilation fins 26 for enhanced vibration damping during such braking operation by suppression of vibration-harmonic resonances. With harmonic resonances so suppressed, vibration energy is dissipated as "white noise", which is substantially unnoticed by vehicle occupants.

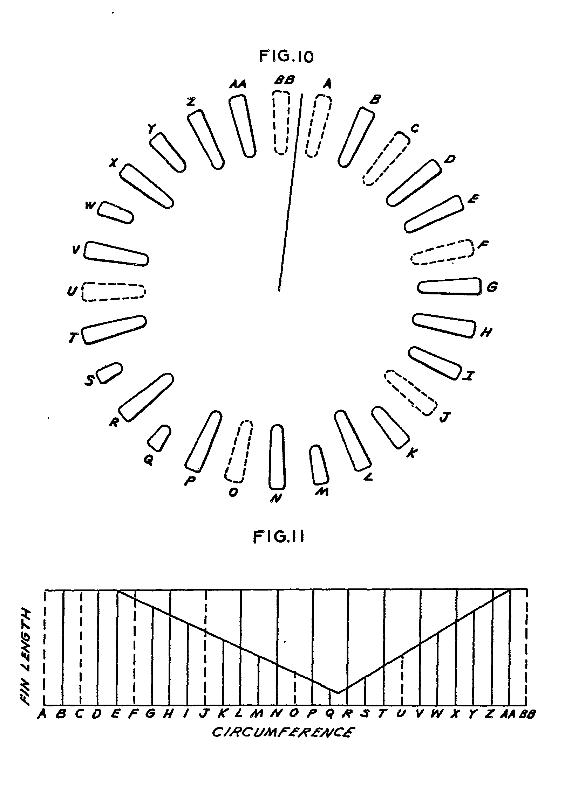

In providing a ventilated disc brake rotor in accordance with the principles of the present invention, the number of cooling fins and the limits of angular spacing between fins are normally dictated by mechanical strength and manufacturing capabilities. That is, the desired number of fins and the maximum allowable spacing between fins are selected to obtain desired strength and rigidity in the overall structure under worst-case stress and temperature conditions. In accordance with an important feature of the preferred embodiments of the invention (FIGS. 3—7), the number of fins is selected to be a prime number. In the embodiments of FIGS. 3—6, twenty-three fins are illustrated. In the embodiment of FIG. 7, twenty-nine fins are employed. The embodiments of FIGS. 3—7 (and FIG. 10) find particular application in 220 mm OD automotive passenger car disc brake rotors. The minimum spacing between fins is typically dictated by manufacturing capabilities. A maximum spacing of 44.45 mm and a minimum spacing of 6.35 to 12.7 mm, measured in the circumferential direction, have been found suitable in automotive passenger car applications.

As a next step in provision of the preferred embodiments of the invention (FIGS. 3—7), the circumferential dimension of the fin array is divided into fractional segments. In accordance with the preferred technique of the present invention, prime numbers are employed where selection permits. Such use of prime numbers is considered to enhance the frequency modulation feature of the invention. Thus, the number of segments is preferably a prime number, five in the embodiments of FIGS. 3—7. Likewise, a nominal fraction associated with each segment is selected such that the fractional denominators are prime numbers. Thus, in FIGS. 3—7, the fractional angular segments nominally comprise segments of 1/5, 1/7, 1/11, 1/13 and 1/17. It will be noted that the segment fractions sum to 0.57, which is substantially less than unity.

The number of fin cycles within each segment is then determined as a function of the total number of fin cycles multiplied by the ratio of the nominal fraction for each segment to the sum of all segment fractions. Thus, the number of cycles in the "1/5" segment of FIG. 3 is a function of the total number of fins (23) multiplied by the ratio of the segment fraction (1/5) to the sum of all fractions (0.57).

More specifically, for the embodiments of FIGS. 3—6, selection of the number of fin cycles within each fractional segment proceeds per the following table:·

TABLE I

| Nominal Segment Fractions (X) | X Multiplier Base (Y) | Adjusted Segment Fractions (Z = Y/Fraction Base) | Number of Cycles/Segment (Z × 23) | Round Off |
|---|---|---|---|---|
| 1/5 | 17017 | .35 | 8.05 | 8 |
| 1/7 | 12155 | .25 | 5.75 | 6 |
| 1/11 | 7735 | .16 | 3.68 | 4 |
| 1/13 | 6545 | .14 | 3.22 | 3 |
| 1/17 | 5005 | .10 | 2.3 | 2 |
| | 48457 | | | 23 |

First, a "multiplier base" is found by multiplying the denominators of the nominal segment sizes. This base is 85085 in the example given. The nominal segment sizes (X in column 1) are then each multiplied by the base (85085), and the results added in column 2 to arrive at a common fraction base (48457). The figures of column 2 (Y) are then divided by the fraction base to arrive at the adjusted fraction or decimals (Z) in column 3 associated with each segment. These adjusted segment fractions are then multiplied by the total selected number of fin cycles (23) and rounded off to arrive at the number of "cycles" per segment in column 5.

For the embodiment of FIG. 7, the last steps of the foregoing procedure are varied slightly, per the following table:

TABLE II

| Nominal Segment Size (X) | Adjusted Segment (Size Z) | Cycles/Segment (Z × 29) | Round off to Closest Prime Number |
|---|---|---|---|
| 1/5 | .35 | 10.2 | 11 |
| 1/7 | .25 | 7.3 | 7 |
| 1/11 | .16 | 4.6 | 5 |
| 1/13 | .14 | 3.9 | 3 |
| 1.17 | .10 | 2.9 | 3 |
| | | | 29 |

That is, the number of fin cycles per segment is rounded off to the closest prime number in the embodiment of FIG. 7, rather than to the closest prime number as in the embodiment of FIGS. 3—6. Note that this results in one extra cycle in the 1/5 nominal segment, and one less cycle in the 1/13 nominal segment. Again, this design decision is in keeping with the general consideration in accordance with the preferred aspects of the invention to employ prime numbers wherever possible.

The next step in providing the preferred embodiments of the invention (FIGS. 3—7) is to determine the sequence of fractional segments around the fin array. In the embodiments of FIGS. 3, 6 and 7, the segments are arranged in non-sequential order by size — i.e., in the order 1/5, 1/17, 1/11, 1/13, 1/7 in the clockwise direction in FIGS. 3, 6 and 7. In the embodiments of FIGS. 4 and 5, the order of decreasing segment size is employed — i.e., 1/5, 1/7, 1/11, 1/13, 1/17.

The size and sequence of fin cycles within each segment must then be determined. In all preferred embodiments of the invention, all fins 26 are of equal angular dimension. Thus, size of the fin cycles is varied by varying the size or angular dimension of the space between the fin of one fin cycle and the fin of the next-adjacent fin cycle. In general, the size and sequence of fin cycles in the embodiments of FIGS. 3—7 are selected as a predetermined function of angle within each segment.

More specifically, in the embodiments of FIGS. 3 and 4, the size and sequence of fin cycles within each segment are arranged so that the wavelength of the predominant vibration frequency for that segment substantially corresponds to the circumferential length of that segment. This is illustrated by the following table:

TABLE III

| Nominal Segment Size | Number of Cycles (Table I) | Cycle Dimension Sequence |
|---|---|---|
| 1/5 | 8 | AABBCCBB |
| 1/7 | 6 | AABCCB |
| 1/11 | 4 | ABCB |
| 1/13 | 3 | ABC |
| 1/17 | 2 | AC |

The dimension "A" is the minimum spacing between fins, or 0.5 inches (12.7 mm) in the embodiments discussed. The dimension "C" is the maximum spacing between fins, or 44.45 mm in the embodiments discussed. The dimension "B" is halfway between "A" and "C", or 28.575 mm in these embodiments.

In the embodiments of FIGS. 5—7, the fin cycles within each segment are arranged in sequential order by length, with the lengths of the successive inter-fin spaces increasing at uniform increments substantially between the minimum and maximum design limits. Specifically, the first inter-fin space in each segment of these embodiments (in clockwise order) is selected to be the minimum design (12.7 mm), and the last space in each segment is initially assumed to be at the maximum design dimension (44.45 mm). The intervening spaces are then dimensioned to increase uniformly from minimum to maximum. For example, the inter-fin spacings in the embodiments of FIGS. 5 and 6 are given by the following table:

TABLE IV

| Nominal Segment Fraction | Inter-fin Spacing Sequence (in inches) | Increment (mm) |
|---|---|---|
| 1/5 | 12.7; 16.67; 20.64; 24.61; 26.99, 32.54, 36.51, 15.08 | 3.97 |
| 1/17 | 12.7, 17.86, 23.02, 28.18, 33.34, 34.53 | 5.16 |
| 1/11 | 12.7, 30.16, 28.58, 36.51 | 7.94 |
| 1/13 | 12.7, 28.58, 44.45 | 15.88 |
| 1/7 | 12.7, 44.45 | — |

It will be noted that it is not always possible using simple fractional increments to have the last space equal to the maximum dimension. The spacing dimensions and sequence within each segment in the embodiment of FIG. 7 is determined in an analogous manner.

In accordance with a second important aspect of the invention, rotor balance about its axis of rotation is obtained, and amplitude modulation (damping) of the vibration harmonics is also accomplished, by varying the length of alternate fins — i.e., every other fin — as a function of angle around the array. More specifically, the radial dimension or length of alternate fins is shortened or decreased from the length of the intermediate fins (which are at equal length) as an exponential function of angle around the fin array. The procedure employed will be described in detail in connection with the embodiment of FIG. 7, with it being understood that the embodiments of FIGS. 3—6 are designed in an analogous fashion (as is the embodiment of FIG. 10 to be described).

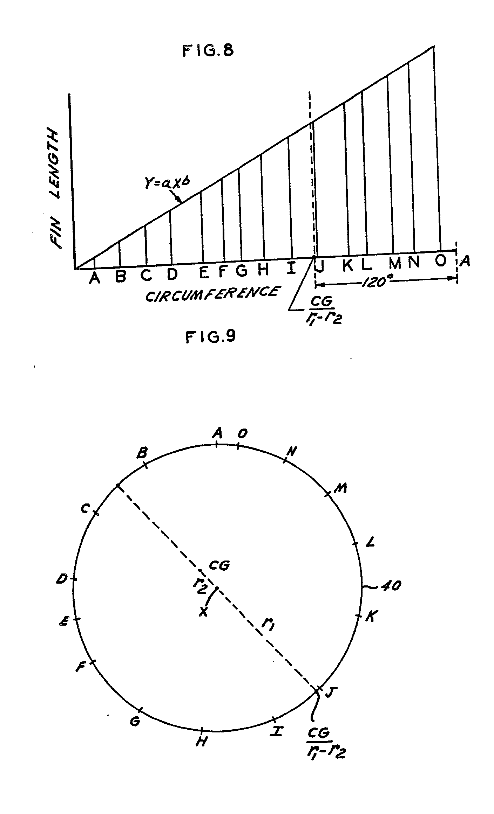

FIG. 9 illustrates alternate fins A—O in the embodiment of FIG. 7 distributed around the circle 40, which is at a radius r from the rotor axis x corresponding to the radius of the weight-center of the fins. After the locations and spacing of the several fins have been determined per the foregoing discussion, the center of gravity CG and the location and amount of unbalance associated with the center of gravity CG are determined either analytically or empirically. A straight line passing through CG and x intersects circle 40 at the point CG/$(r_1-r_2)$, which represents the point at which weight must be removed, and the amount of weight which must be removed, to balance the rotor.

FIG. 8 graphically illustrates the amount of material which must be "removed" from alternate fins A—O in order to balance the rotor and at the same time provide the desired vibration amplitude modulation previously described. In FIG. 8, the abscissa is in degrees around circle 40, with the relative locations of fins A—O being placed accordingly. The ordinate of FIG. 8 represents the amount by which each fin A—O is to be foreshortened as compared with the intervening fins, which are all of identical length. The angle of point CG/$r_1-r_2$, which fell next to fin J in FIG. 9, is placed in FIG. 8 at a position corresponding to an angle of 120° from the shortest fin — i.e. fin A. In accordance with this aspect of the present invention, the length of alternate fins A—O is then determined as a function of the exponential equation $y = ax^b$ in FIG. 8, where y is fin length, x is angle in radians, and a and b are constants. As a starting point, b is made equal to unity. However, it has been found necessary in practice of the invention to vary the constant b upwardly or downwardly from unity because of the limited number of fins.

In one example of the invention in accordance with the embodiment of FIG. 7, the nominal fin length is 36.58 mm, and the lengths of alternative fins A—O are given in millimeters by the following table:

## TABLE V

| Fin | Length |
| --- | --- |
| A | 20.83 |
| B | 23.11 |
| C | 25.15 |
| D | 27.69 |
| E | 28.45 |
| F | 29.72 |
| G | 30.73 |
| H | 30.99 |
| I* | 30.73 |
| J | 31.75 |
| K* | 31.5 |
| L* | 30.99 |
| M* | 31.5 |
| N | 32.51 |
| O | 34.04 |

It will be noted that several fins designated by the asterisk (*) are not in sequential order by length. Because of the limited number of fins, it is sometimes possible only to approximate balance by the foregoing method. The lengths of individual fins are then selectively varied to bring the rotor into balance, while still maintaining a substantially exponential length function as previously described. It will also be noted that, because an odd number of fins are employed, adjacent fins A and O are foreshortened.

FIG. 10 illustrates a ventilation fin pattern in accordance with another embodiment of the present invention. In the embodiment of FIG. 10, the design begins with a uniformly spaced array of fin locations, in this case twenty-eight locations A—BB. Fins are then deleted or left out of locations at spacings which increase step-wise around the array. That is, one fin at location B separates "empty" locations A and C, two fins at locations D and E separate "empty" locations C and F, etc. This staggered location of empty fin locations inhibits reinforcement of vibration harmonics. To obtain amplitude modulation, and to balance the rotor, the fins at alternating locations are foreshortened as an exponential function of angle as shown in FIG. 11, starting with fin location E and proceeding around the array to fin location BB. (It will be appreciated that there are no fins at locations F, J, D and U to be shortened.) The fins in the embodiment of FIG. 10 have equal angular dimension.

Ventilated disc brake rotors having the configuration of FIG. 10 have been constructed and compared in terms of vibration damping to a disc brake rotor of conventional construction and identical size and composition. The conventional rotor employed for comparison purposes is used on the Chrysler K car and embodies twenty-eight equally spaced fins of identical angular dimension. The radial dimension of the fins alternate between long and short around the array, with all long fins being of equal length and all short fins being of equal length. The damping coefficient for the conventional rotor was between 0.25 and 0.29, while the damping coefficient of the embodiment of FIG. 10 was 0.60.

Thus, a first important aspect of the present invention, disclosed in connection with FIGS. 3—7, contemplates brake rotors wherein a circumferential array of cooling ribs or fins is divided into a plurality of unequal nominal fractional segments. Preferably, the number of fins, the number of segments and the nominal segment fractions are prime numbers. The actual size of each fractional segment in terms of the number of inter-fin spaces disposed therein is then determined as a function of the ratio of segment of fraction to the numerical sum of all segment fraction and rounded off to the closest number (FIGS. 3—6) or to the closest prime number (FIG. 7). Note that application of the latter technique in the embodiment of FIG. 7 resulted in equality of actual array fractional segments, even though nominal fractional segments were unequal, i.e., the 1/13 and 1/17 nominal segments, because of the limited number of fins and inter-fin spaces in the overall array. The sequence of fractional segments is in non-sequential order by size (FIGS. 3, 6 and 7) or in order of decreasing size (FIGS. 4 and 5). The sizes and sequence of spaces within each array segment are in a substantially cyclic pattern having a pattern wavelength which substantially corresponds to the circumferential length of the associated segment (FIGS. 3 and 4), or are in a sequential incrementally increasing pattern between design minimum and maximum limits (FIGS. 5—7).

In accordance with a second aspect of the present invention, which is preferably used in combination with the first aspect as described in detail in connection with FIGS. 7—9, but may also be employed separately per FIGS. 10 and 11, the length of the fins at alternate fin positions is varied as an exponential function of angle around the array.

In accordance with a third aspect of the invention described in connection with FIG. 10, fin locations are uniformly spaced or positioned around the rotor, and fins are selectively deleted at location spacings which increase step-wise around the array.

The first and third aspects of the invention, which provide inter-fin spaces at pseudo-random locations and/or of pseudo-random dimension, achieve frequency-modulated damping or suppression of vibration harmonics in the rotor. Selective foreshortening at alternating fin locations as a function of angle around the array obtains amplitude modulation of vibration harmonics, and also is employed to balance the rotor.

It will be appreciated that, although the invention has been disclosed in detail in connection with ventilated disc brake rotors, the principles of the invention find equal application in the manufacture of drum brake rotors — i.e. brake drums — wherein spacing between and/or axial length of cooling fins around the drum periphery may be varied to obtain reduced brake squeal in accordance with the invention.

In the appendent claims, by "segment nominal fraction" for each segment is meant the nominal fractional size of that segment as compared with the whole.

## Claims

1. A brake rotor (20) comprising means (22, 24) providing an annular braking surface and a circumferential array of cooling fins (26) coupled for heat dissipation to said braking surface means and structured for suppression of harmonic vibration during braking, said array of fins (26) consisting of a preselected number of fin cycles each defined by a single fin and a space between said single fin and the next-adjacent fin in said array, characterized in that said fin cycles are grouped in a plurality of nominal fractional angular segments, with the number of fin cycles in each of said segments being a predetermined function of the ratio of the corresponding segment nominal fraction to the numerical sum of all segment nominal fractions, the angular dimension of each fin cycle within each said segment being a predetermined function of angle within the corresponding said segment.

2. The rotor (20) set forth in claim 1 characterized in that said fin cycles are arranged by length within each segment so that the wavelength of the predominant vibration frequency of each said segment substantially corresponds to the circumferential length of that segment.

3. The rotor (20) set forth in claim 2 characterized in that said fin cycles are arranged within each said segment in a substantially cyclic sequence completing one cycle within said length of that segment.

4. The rotor (20) set forth in claim 1 characterized in that said fin cycles are in sequence by length within each said segment.

5. The rotor (20) set forth in claim 4 characterized in that said fin cycles within each said segment are sequential by length at uniform increments substantially between preselected minimum and maximum lengths.

6. The rotor (20) set forth in any preceding claim characterized in that said total number of fins (26) is prime number.

7. The rotor (20) set forth in claim 6 characterized in that said total number is 23.

8. The rotor (20) set forth in claim 6 characterized in that said total number is 29.

9. The rotor (20) set forth in any preceding claim characterized in that the number of segments in which said array is divided is a prime number.

10. The rotor (20) set forth in any preceding claim characterized in that the nominal fractional size of each said nominal fractional angular segment is a prime number.

11. The rotor (20) set forth in claim 10 characterized in that said number of segments is 5.

12. The rotor (20) set forth in claim 11 characterized in that said nominal fractions comprise 1/5, 1/7, 1/11, 1/13 and 1/17.

13. The rotor (20) set forth in any preceding claim characterized in that said segments are disposed in sequence by size around said array.

14. The rotor (20) set forth in any preceding claim 1 or 4—6 or 8—12 characterized in that the total number of fin cycles within each said segment is a prime number.

15. The rotor (20) set forth in any preceding claim wherein all of said fins are of equal angular dimension, characterized in that radial length of alternate ones of said fins vary as a preselected function of angle around said array, the remainder of said fins being of equal length.

16. The rotor (20) set forth in claim 15 characterized in that said preselected function is an exponential function.

EP 0 205 713 B1

17. A brake rotor (20) comprising annular brake surface means (22, 24) and a plurality of cooling fins (26 disposed at preselected fin positions in a circumferential array around said rotor and coupled for heat dissipation to said means, characterized by the improvement for reducing harmonic vibration of said rotor (20) wherein the said cooling fins (26) at alternate ones of said positions are of progressively reduced radial dimension as compared with the remainder of said fins, which are of equal length, as a substantially exponential function of angle around said array.

18. The rotor (20) set forth in claim 17 wherein said fin positions are at uniform spacing around said array, characterized in that fins are absent from selected ones of said positions separated from each other by spacing increments which increase step-wise around said array.

19. The rotor (20) set forth in claim 17 wherein said array of fins consists of a preselected number of fin cycles each defined by a single fin and a space between said single fin and the next-adjacent fin in said array, characterized in that said fin cycles are grouped in a plurality of nominal fractional angular segments, with the number of fin cycles in each of said segments being a predetermined function of the ratio of the corresponding segment nominal fraction to the numerical sum of all segment nominal fractions, the angular dimension of each fin cycle within each said segment being a predetermined function of angle within the corresponding said segment.

**Patentansprüche**

1. Rotor (20) einer Bremse, enthaltend Mittel (22, 24), die eine ringförmige Bremsfläche bieten und eine Umfangsanordnung von Kühlrippen (26) welche zur Wärmeableitung an die besagten Bremsflächen-Mittel gekoppelt sind und zur Unterdrückung von harmonischen Schwingungen beim Bremsen ausgebildet sind, wobei die besagte Anordnung von Rippen (26) aus einer vorgewählten Anzahl von Rippen-Zyklen besteht, von denen jeder durch eine einzelne Rippe und einen Zwischenraum zwischen der besagten einzelnen Rippe und der nächst-benachbarten Rippe in der besagten Anordnung deriniert ist, dadurch gekennzeichnet, daß die besagten Rippen-Zyklen in einer Anzahl von nominellen Bruchteil-Winkel-Abschnitten gruppiert sind, wobei die Zahl der Rippen-Zyklen in jedem der besagten Abschnitte eine vorbestimmte Funktion des Verhältnisses des entsprechenden Abschnitts-Nominal-Bruchteils zu der numerischen Summe aller Abschnitts-Nominal-Bruchteile ist und wobei die winkelmäßige Größe jedes Rippen-Zyklus innerhalb jedes besagten Abschnitts eine vorbestimmte Funktion des Winkels in dem betreffenden Abschnitt ist.

2. Rotor (20) nach Anspruch 1, dadurch gekennzeichnet, daß die besagten Rippen-Zyklen nach der Länge in jedem Abschnitt so angeordnet sind, daß die Wellenlänge der vorherrschenden Schwingungsfrequenz jedes besagten Abschnitts im wesentlichen der Umfangslänge dieses Abschnitts entspricht.

3. Rotor (20) nach Anspruch 2, dadurch gekennzeichnet, daß die besagten Rippen-Zyklen innerhalb jedes besagten Abschnitts in einer im wesentlichen zyklischen Folge unter Vervollständigung eines Zyklus innerhalb der besagten Länge dieses Abschnitts angeordnet sind.

4. Rotor (20) nach Anspruch 1, dadurch gekennzeichnet, daß die besagten Rippen-Zyklen in jedem besagten Abschnitt eine Folge nach der Länge haben.

5. Rotor (20) nach Anspruch 4, dadurch gekennzeichnet, daß die besagten Rippen-Zyklen in jedem besagten Abschnitt nach der Länge im wesentlichen mit gleichmäßigen Zuwachsbeträgen zwischen vorgewählten kleinsten und größten Längen aufeinanderfolgen.

6. Rotor (20) nach einem der voraufgehenden Ansprüche, dadurch gekennzeichnet, daß die besagte Gesamtzahl der Rippen (26) eine Primzahl ist.

7. Rotor (20) nach Anspruch 6, dadurch gekennzeichnet, daß die besagte Gesamtzahl 23 ist.

8. Rotor (20) nach Anspruch 6, dadurch gekennzeichnet, daß die besagte Gesamtzahl 29 ist.

9. Rotor (20) nach einem der voraufgehenden Ansprüche, dadurch gekennzeichnet, daß die Anzahl der Abschnitte, in die die besagte Anordnung unterteilt ist, eine Primzahl ist.

10. Rotor (20) nach einem der voraufgehenden Ansprüche, dadurch gekennzeichnet, daß die nominelle Bruchteil-Größe jedes der besagten nominellen Bruchteil-Winkel-Abschnitte eine Primzahl ist.

11. Rotor (20) nach Anspruch 10, dadurch gekennzeichnet, daß die besagte Anzahl der Abschnitte 5 ist.

12. Rotor (20) nach Anspruch 11, dadurch gekennzeichnet, daß die besagte nominellen Bruchteile 1/5, 1/7, 1/11, 1/13 und 1/17 einschließen.

13. Rotor (20) nach einem der voraufgehenden Ansprüche, dadurch gekennzeichnet, daß die besagten Abschnitte der Größe nach aufeinanderfolgend um die Anordnung vorgesehen sind.

14. Rotor (20) nach einem der voraufgehenden Ansprüche 1 oder 4—6 oder 8—12, dadurch gekennzeichnet, daß die Gesamtzahl der Rippen-Zyklen innerhalb jedes besagten Abschnitts eine Primzahl ist.

15. Rotor (20) nach einem der voraufgehenden Ansprüche, wobei alle besagten Rippen die gleiche winkelmäßige Abmessung haben, dadurch gekennzeichnet, daß die radiale Länge jeder zweiten der besagten Rippen als eine vorgewählte Funktion des Winkels um die besagte Anordnung variiert, wobei der Rest der besagten Rippen von gleicher Länge ist.

16. Rotor (20) nach Anspruch 15, dadurch gekennzeichnet, daß die besagte vorgewählte Funktion eine Exponentialfunktion ist.

17. Rotor (20), enthaltend ringförmige Bremsflächen-Mittel (22, 24) und eine Anzahl von Kühlrippen (26), die in vorgewählten Rippen-Positionen in einer Umfangsanordnung um den besagten Rotor

8

vorgesehen und zur Wärmeableitung mit den besagten Mitteln gekoppelt sind, gekennzeichnet durch die Verbesserung zur Minderung harmonischer Schwingungen des besagten Rotors (20), wobei die besagten Kühlrippen (26) in jeder zweiten der besagten Positionen eine zunehmend verringerte radiale Abmessung im Vergleich mit dem Rest der besagten Rippen, die gleiche Länge haben, aufweisen, und zwar als eine im wesentlichen exponentielle Funktion des Winkels um die besagte Anordnung.

18. Rotor (20) nach Anspruch 17, wobei die besagten Rippen-Positionen mit gleichmäßigen Abständen um die besagte Anordnung vorgesehen sind, gekennzeichnet durch Fehlen von Rippen in jeweils ausgewählten der besagten Positionen, die voneinander durch Abstands-Beträge getrennt sind, die stufenweise um die besagte Anordnung anwachsen.

19. Rotor (20) nach Anspruch 17, wobei die besagte Anordnung von Rippen aus einer vorgewählten Zahl von Rippen-Zyklen besteht, von denen jeder durch eine einzelne Rippe und einen Zwischenraum zwischen der besagten einzelnen Rippe und der nächst-benachbarten Rippe in der besagten Anordnung definiert ist, dadurch gekennzeichnet, daß die besagten Rippen-Zyklen in einer Anzahl von nominellen Bruchteil-Winkel-Abschnitten gruppiert sind, wobei die Zahl der Rippen-Zyklen in jedem der besagten Abschnitte eine vorbestimmte Funktion des Verhältnisses des entsprechenden Abschnitts-Nominal-Bruchteils zu der numerischen Summe aller Abschnitts-Nominal-Bruchteile ist und wobei die winkelmäßige Größe jedes Rippen-Zyklus innerhalb jedes besagten Abschnitts eine vorbestimmte Funktion des Winkels in dem betreffenden Abschnitt ist.

## Revendications

1. Rotor de frein (20) comprenant des moyens (22, 24), procurant une surface de frottement annulaire, et une rangée circonférentielle d'ailettes de refroidissement (26) reliées auxdits moyens à surface de frottement pour dissiper de la chaleur et agencées de manière à supprimer la vibration harmonique pendant le freinage, ladite rangée d'ailettes (26) consistant en un nombre prédéterminé de cycles d'ailettes définis chacun par une ailette individuelle et par un espace entre ladite ailette individuelle et l'ailette immédiatement suivante dans ladite rangée, caractérisé en ce que lesdits cycles d'ailettes sont groupés en une pluralité de secteurs angulaires fractionnaires nominaux, le nombre de cycles d'ailettes étant, dans chacun de ces secteurs, une fonction prédéterminée du rapport de la fraction nominale de secteur correspondante à la somme numérique de toutes les fractions nominales de secteur, la dimension angulaire de chaque cycle d'ailettes à l'intérieur de chacun desdits secteurs étant une fonction angulaire prédéterminée à l'intérieur dudit secteur correspondant.

2. Rotor (20) selon la revendication 1, caractérisé en ce que lesdits cycles d'ailettes sont disposés en fonction de leur longueur à l'intérieur de chaque secteur de façon que la longueur d'onde de la fréquence de vibration prédominante de chacun desdits secteurs corresponde sensiblement à la longueur circonférentielle de ce secteur.

3. Rotor (20) selon la revendication 2, caractérisé en ce que, à l'intérieur de chacun desdits secteurs, lesdits cycles d'ailettes sont disposés selon une séquence cyclique en substance, réalisant un cycle à l'intérieur de ladite longueur de ce secteur.

4. Rotor (20) selon la revendication 1, caractérisé en ce que lesdits cycles d'ailettes se succèdent en fonction de leur longueur à l'intérieur de chacun desdits secteurs.

5. Rotor (20) selon la revendication 4, caractérisé en ce que, à l'intérieur de chacun desdits secteurs, lesdits cycles d'ailettes se succèdent en fonction de leur longueur, selon des incréments sensiblement uniformes, entre des longueurs minimum et maximum présélectionnées.

6. Rotor (20) selon l'une quelconque des revendications précédentes, caractérisé en ce que ledit nombre total d'ailettes (26) est un nombre premier.

7. Rotor (20) selon la revendication 6, caractérisé en ce que ledit nombre total est de 23.

8. Rotor (20) selon la revendication 6, caractérisé en ce que ledit nombre total est de 29.

9. Rotor (20) selon l'une quelconque des revendications précédentes, caractérisé en ce que le nombre de secteurs divisant ladite rangée est un nombre premier.

10. Rotor (20) selon l'une quelconque des revendications précédentes, caractérisé en ce que la dimension fractionnaire nominale de chacun desdits secteurs angulaires fractionnaires nominaux est un nombre premier.

11. Rotor (20) selon la revendication 10, caractérisé en ce que ledit nombre de secteurs est de 5.

12. Rotor (20) selon la revendication 11, caractérisé en ce que lesdites fractions nominales comprennent 1/5, 1/7, 1/11, 1/13 et 1/17.

13. Rotor (20) selon l'une quelconque des revendications précédentes, caractérisé en ce que lesdits secteurs se succèdent en fonction de leur grandeur tout au long de ladite rangée.

14. Rotor (20) selon l'une quelconque des revendications 1 et 4 à 6 et 8 à 12, caractérisé en ce que le nombre total de cycles d'ailettes à l'intérieur de chacun desdits secteurs est un nombre premier.

15. Rotor (20) selon l'une quelconque des revendications précédentes, dans lequel lesdites ailettes ont toutes des dimensions angulaires égales, caractérisé en ce que, dans ladite rangée, la longueur radiale de l'une desdites ailettes sur deux varie comme une fonction angulaire présélectionnée, lesdites ailettes restantes étant de même longueur.

16. Rotor (20) selon la revendication 15, caractérisé en ce que ladite fonction présélectionnée est une fonction exponentielle.

17. Rotor de frein (20) comprenant des moyens (22, 24) à surface de frottement annulaire, et une pluralité d'ailettes de refroidissement (26) disposées à des emplacements d'ailettes prédéterminés en une rangée circonférentielle sur ledit rotor et reliées auxdits moyens de façon à assurer une dissipation de chaleur, caractérisé par le perfectionnement pour réduire la vibration harmonique dudit rotor (20), dans lequel lesdites ailettes de refroidissement (26) situées à un emplacement susdit sur deux ont des dimensions radiales qui se réduisent progressivement par rapport au reste desdites ailettes, lesquelles sont de même longueur, selon une fonction angulaire sensiblement exponentielle tout au long de ladite rangée.

18. Rotor (20) selon la revendication 17, dans lequel lesdits emplacement d'ailettes sont uniformément espacés tout au long de ladite rangée, caractérisé en ce qu'il manque des ailettes à certains emplacements sélectionnés qui sont séparés entre eux par des incréments d'espacement qui augmentent progressivement tout au long de ladite rangée.

19. Rotor (20) selon la revendication 17, dans lequel ladite rangée d'ailettes consiste en un nombre présélectionné de cycles d'ailettes formés chacun par un ailette individuelle et par un espace entre ladite ailette individuelle et l'ailette immédiatement suivante dans ladite rangée, caractérisé en ce que lesdits cycles d'ailettes sont groupés en une pluralité de secteurs angulaires fractionnaires nominaux, le nombre de cycles d'ailettes dans chacun de ces secteurs étant une fonction prédéterminée du rapport de la fraction nominale de secteur correspondante à la somme numérique de toutes les fractions nominales de secteur, la dimension angulaire de chaque cycle d'ailettes à l'intérieur de chacun desdits secteurs étant une fonction angulaire prédéterminée à l'intérieur dudit secteur correspondant.

FIG.2

FIG.1

FIG.3

EP 0 205 713 B1

FIG.4

FIG.5

FIG.6

2

FIG.7

FIG.8

FIG.9

FIG.10

FIG.11